# EUROPÄISCHE PATENTSCHRIFT

(11) **EP 0 687 434 B1**
(45) Veröffentlichungstag und Bekanntmachung des Hinweises auf die Patenterteilung: **24.06.1998**
(21) Anmeldenummer: 95104973.3
(22) Anmeldetag: 03.04.1995
(51) Int. Cl.: A47J 27/16, A21B 3/04, F24C 9/00

(54) **Backofen zum Dampfgaren**
Baking oven for steam cooking
Four de cuisson pour cuisson à vapeur

(30) Priorität: 15.06.1994 DE 4420821
(43) Veröffentlichungstag der Anmeldung: 20.12.1995
(73) Patentinhaber: Bosch-Siemens Hausgeräte GmbH, 81669 München (DE)
(72) Erfinder: Henry, Karlheinz, Dipl.-Ing., D-83308 Trostberg (DE); Hess, Helmut, Dipl.-Ing. (FH), D-83301 Traunreut (DE)

(56) Entgegenhaltungen:
- EP-A- 0 191 267
- EP-A- 0 244 538
- EP-A- 0 277 337
- EP-A- 0 517 681
- EP-A- 0 523 489
- DE-A- 3 443 477
- DE-A- 3 703 540
- DE-C- 4 124 896
- DE-C- 4 125 696

## Beschreibung

Die vorliegende Erfindung betrifft einen Backofen zum Dampfgaren nach dem Oberbegriff Anspruches 1.

Ein gattungsgemäßes Gargerät ist bekannt aus DE 34 41 767 A1 wobei dieses einen Garraum für die Aufnahme von zu garenden Lebensmitteln aufweist, der durch eine frontseitige Zugriffsöffnung zugänglich ist, die wiederum durch eine Tür verschließbar ist. Von der Zugriffsöffnung aus erstrecken sich an gegenüberliegenden senkrechten Seitenwänden des Garraumes waagrecht verlaufende Führungsschienen in die Tiefe des Garraumes. In diese Führungsschienen ist eine Metallplatte eingeschoben, auf die Wasser aufgesprüht oder aufgetropft werden kann. Das Wasser ist der Metallplatte von einem außerhalb des Garraumes befindlichen Wasservorratsbehälter zuführbar. Für einen Garprozess mit Dampfbehandlung des Gargutes wird die Metallplatte durch eine Fremdheizquelle oder durch die Garraumbeheizung mittelbar auf eine Temperatur über dem Siedepunkt von Wasser aufgeheizt. So wird großflächig auf der Metallplatte im Garraum Dampf erzeugt. Die Metallplatte kann gegebenenfalls mit eigenen zusätzlichen Heizelementen versehen sein. Nachteilig dabei ist, daß ein im Garraum angeordneter Unterhitze-Heizkörper durch die Metallplatte vom übrigen Garraum abgeschirmt ist, und somit ein Wärmestau hervorgerufen werden kann, die große Wärmekapazität der Metallplatte, die die Funktion des Heizungssystems, das auf einen Betrieb ohne Metallplatte bzw. Dampfgaren ausgelegt ist, beeinträchtigen kann, die gegebenenfalls zusätzlich erforderlichen Heizelemente an der Metallplatte und, wenn die vorhandene Garraumheizung zur Beheizung der Metallplatte verwendet wird, die unzureichende Wärmeankopplung zwischen Heizkörper und Metallplatte und der daraus resultierende geringere Wirkungsgrad und Reaktionsgrad, der Verdampfungseinrichtung.

In DE 41 31 748 A1 ist ein Gargerät zum Dampfgaren offenbart, bei dem in der Ofenmuffel ein radial förderndes Lüfterrad mit einer zentralen, axialen Ansaugöffnung vorgesehen ist. Dem Umfang des Lüfterrades ist ein Heizelement zugeordnet. Zur Dampferzeugung führt ein Wasserzufuhrrohr in das Lüfterrad und mündet dort gegenüber einer Sprühvorrichtung. Das durch Fliehkräfte der mit dem Lüfterrad umlaufenden Sprühvorrichtung feinverteilt abgesprühte Wasser mischt sich in den vom Lüfterrad angesaugten Luftstrom. Um eine gleichmäßige Verteilung des abgesprühten Wassers über das Volumen des geförderten Luftstromes zu erreichen, ist die Sprühvorrichtung mit Abstand von der Rückwand angeordnet. Der abgesprühte Wassernebel gelangt somit in alle Strömungsfäden des angesaugten Luftstromes und wird gleichmäßig über die Mantelfläche des Lüfterrades zu einem Heizelement gefördert. Das Heizelement ist mehrlagig ausgebildet und erstreckt sich um den Umfang des Lüfterrades und ist zudem über die in Achsrichtung gemessene Tiefe des Lüfterrades gleichmäßig verteilt. Nachteilig dabei ist, daß eine Dampferzeugung grundsätzlich nur bei Betrieb des Lüfterrades möglich ist, daß am Lüfterrad eine zusätzliche Sprühvorrichtung anzuordnen ist, und daß die Funktion der Sprühvorrichtung durch Verschmutzung beeinträchtigbar ist.

Aufgabe der vorliegenden Erfindung ist es, ein Gargerät zum Dampfgaren bereitzustellen, das obige Nachteile beseitigt.

Erfindungsgemäß wird dies durch die Merkmale des Anspruches 1 erreicht. Die Befestigung der Verdampfungseinrichtung am Garraumheizkörper ermöglicht einen optimalen Wärmeübergang. Indem die geometrische Erstreckung der Verdampfungseinrichtung dem Verlauf des Garraumheizkörpers folgt und so im wesentlichen über die gesamte Länge am Heizkörper anliegt, ist der Wirkungsgrad und Reaktionsgrad der Verdampfungseinrichtung weiter verbessert. Zudem kann vorteilhafterweise deren Fläche bzw. Masse deutlich gegenüber der Metallplatte des Standes der Technik verringert werden. Durch das Führen einer begrenzten Wassermenge entlang des Heizkörpers bleibt die Funktionsfähigkeit des Heizungssystems unberührt. Auch das Auftreten eines Wärmestaues ist durch eine im Vergleich zur bekannten Metallplatte deutlich verringerte Fläche ausgeschlossen. Zudem ist ein Dampfgaren ohne Betrieb des Garraumlüfters möglich.

In einer bevorzugten Weiterbildung ist der Garraumheizkörper ein schraubenförmiger Rohrheizkörper, der im Bereich der Rückwand des Garraumes angeordnet ist, und dessen Windungen im wesentlichen parallel zur Rückwand verlaufen. Dadurch ist es auf einfache Weise möglich, die am Heizkörper befestigte Verdampfungsrichtung für die Bedienperson unsichtbar im Garraum hinter der Prallwand anzuordnen. Zudem ist infolge einer derartigen Positionierung der Verdampfungseinrichtung eine optimale Dampfverteilung im Umluftbetrieb des Gargerätes möglich. Vorteilhafterweise ist die Verdampfungseinrichtung durch einen Blechstreifen gebildet, der wenigstens zwei Windungen des Umluft-Rohrheizkörpers miteinander verbindet. Mögliche Alternativen zu der mit Hilfe des Blechstreifens gebildeten Wasserrinne wären ein Wasserrohr mit Dampfaustrittsöffnungen oder ein am Rohrheizkörper befestigtes gebogenes Blech mit U-förmigem Profil als Verdampfungseinrichtung. Die Verwendung des Blechstreifens ist zum einen jedoch fertigungstechnisch sehr günstig und zum anderen wird das zu verdampfende Wasser zum Teil auch unmittelbar von den Rohrheizkörpern selbst geführt, was einen optimalen Wirkungsgrad ergibt.

Gemäß einer weiteren bevorzugten Ausführungsform ist die Verdampfungseinrichtung im Bereich eines Gefälles des Garraumheizkörpers angeordnet. So ist sichergestellt, daß das der Verdampfungseinrichtung zugeführte Wasser selbsttätig ohne Zuhilfenahme einer Pumpe oder Sprüheinrichtung den Rohrheizkörper entlang fließt und zudem nicht an Teilbereichen des Heizkörpers vorbeifällt oder -tropft. Damit kein Wasser unverdampft aus der Verdampfungseinrichtung fließt, weist die Verdampfungseinrichtung einen sich über deren tiefsten Punkt wieder nach oben erstreckenden Endabschnitt auf.

Nachfolgend sind anhand schematischer Darstellungen zwei Ausführungsbeispiele des erfindungsgemäßen Gargerätes beschrieben. Es zeigen:
- Fig. 1: vereinfacht den Garraum bei geöffneter Garraumtür;
- Fig. 2: den Garraum-Heizkörper mit Verdampfungseinrichtung in einem Schnitt im wesentlichen entlang der Linie II-II in Fig. 1 in vergrößertem Maßstab und
- Fig. 3: ein zweites Ausführungsbeispiel einer Verdampfungseinrichtung in einer Darstellung entsprechend Fig. 2.

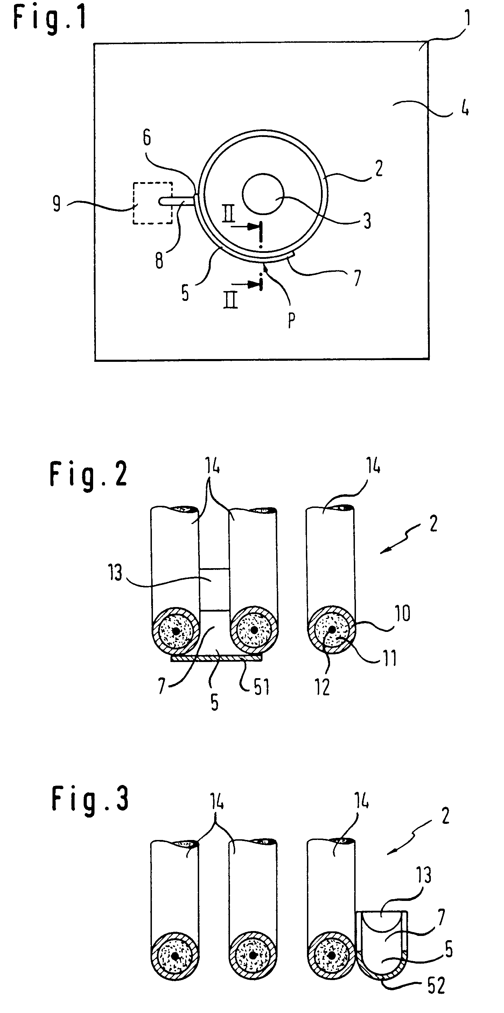

In Figur 1 ist ein Garraum 1 bei geöffneter Garraumtür (nicht gezeigt) dargestellt. Darin ist ein schraubenförmiger Umluft-Rohrheizkörper 2 und ein Lüfterrad 3 im Bereich vor einer Rückwand 4 hinter einer Prallwand (nicht gezeigt) des Gargerätes angeordnet. Das Lüfterrad 3 und der Rohrheizkörper 2 sind konzentrisch angeordnet, wobei sich Windungen 14 des Rohrheizkörpers um den Umfang des Lüfterrades ringförmig erstrecken. Dabei verlaufen die Windungen 14 im wesentlichen parallel zur Rückwand 4. Der Rohrheizkörper 2 weist einen Aluminiummantel 10 und darin eingeschlossen einen in Quarzsand 11 eingebetteten Widerstandsdraht 12 auf. Über den Verlauf von etwa einviertel eines Windungsumfanges ist an den Rohrheizkörper 2 eine Verdampfungseinrichtung 5 gelötet. Gemäß dem ersten Ausführungsbeispiel ist die Verdampfungseinrichtung 5 durch einen Blechstreifen 51 gebildet, der zwischen zwei benachbarte Windungen 14 eine Wasserrinne bildend gelötet ist und diese verbindet. Die Verdampfungseinrichtung 5 erstreckt sich von einem Anfangsabschnitt 6, der sich in mittlerer Höhe der Windungen 14 befindet, entlang dem kreisförmigen Verlauf der Windung 14 bis zu einem tiefsten Punkt P, (der) zugleich der tiefste Punkt der Rohrheizkörperwindung 14 ist, und darüber hinaus mit einem Endabschnitt 7 wieder, weiterhin dem kreisförmigen Verlauf der Windung 14 folgend, nach oben. Im Endabschnitt 7 weist die Verdampfungseinrichtung 5 bzw. der Blechstreifen 51 eine Wandung 13 auf, die ein Auslaufen des Wassers vor dessen Verdampfen verhindert. In den Anfangsabschnitt 6 der Verdampfungseinrichtung 5 mündet ein Wasserrohr, das der Verdampfungseinrichtung aus einem hinter der Garraumrückwand 4 angeordneten Wasserbehältnis 9 Wasser zuführt.

In Abhängigkeit von der erforderlichen Dampfmenge bzw. Wassermenge speist eine Dosiervorrichtung (nicht gezeigt) Wasser in den Anfangsabschnitt 6 der vorgeheizten Verdampfungseinrichtung 5. Das Wasser fließt entlang der Verdampfungseinrichtung 5 entsprechend deren Gefälle und wird dabei verdampft. Gelangt dabei Wasser über den tiefsten Punkt P der Verdampfungseinrichtung 5 hinaus, wird es durch die Wandung 13 am Herauslaufen aus der Verdampfungseinrichtung 5 gehindert.

Der entstandene Dampf wird in einer ersten Betriebsart durch das Lüfterrad 3 des Umluftgebläses im gesamten Garraum 1 gleichmäßig verteilt. Ein weiteres Erhitzen des Dampf-Luftgemisches ist durch die Zuschaltung beispielsweise der Oberhitze oder der Unterhitze möglich. In einer zweiten Betriebsart steht das Lüfterrad 3 während der Dampferzeugung still. Der erzeugte Dampf steigt infolge des geringeren spezifischen Gewichts im Vergleich zur Luft nach oben, und der Garraum 1 wird von oben beginnend mit einer homogenen Dampfatmosphäre gefüllt.

Gemäß einem zweiten Ausführungsbeispiel ist die Verdampfungseinrichtung durch eine im Querschnitt U-förmige Blechrinne 52 gebildet, die an eine Windung 14 des Heizkörpers 2 deren Verlauf folgend, entsprechend dem Blechstreifen 51, gelötet ist.

## Patentansprüche

1. Backofen zum Dampfgaren in einem Garraum mit mindestens einem Garraumheizkörper und einer Wasserzufuhreinrichtung, die einer im Garraum angeordneten Verdampfungseinrichtung Wasser zuführt, **dadurch gekennzeichnet**, daß die Verdampfungseinrichtung (5) am Garraumheizkörper (2) befestigt ist und in ihrer geometrischen Erstreckung dessen Verlauf folgend über im wesentlichen ihre gesamte Länge am Garraumheizkörper (2) anliegt.

2. Backofen nach Anspruch 1, dadurch gekennzeichnet, daß der Garraumheizkörper ein schraubenförmiger Rohrheizkörper (2) ist, der im Bereich einer Rückwand (4) des Garraumes (1) angeordnet ist, und dessen Windungen (14) im wesentlichen parallel zur Rückwand (4) verlaufen.

3. Backofen nach Anspruch 2, dadurch gekennzeichnet, daß die Verdampfungseinrichtung (5) durch einen Blechstreifen (51) gebildet ist, der wenigstens zwei Windungen (14) des Rohrheizkörpers (2) verbindet.

4. Backofen nach einem der vorhergehenden Ansprüche, dadurch gekennzeichnet, daß die Verdampfungseinrichtung (5, 51) im Bereich eines Gefälles des Garraumheizkörpers (2) angeordnet ist.

5. Backofen nach Anspruch 4, dadurch gekennzeichnet, daß die Verdampfungseinrichtung (5) einen sich über ihren tiefsten Punkt (P) wieder nach oben erstreckenden Endabschnitt (7) aufweist.

## Claims

1. Baking oven for steam cooking in a cooking space with at least one cooking space heater body and a water feed device which feeds water to a evaporating device arranged in the cooking space, characterised thereby that the evaporating device (5) is fastened to the cooking space heater body (2) and in its geometrical extent follows the course of the cooking space heater body (2) and bears over substantially its entire length against the cooking space heater body (2).

2. Baking oven according to claim 1, characterised thereby that the cooking space heater body is a helical tubular heater body (2), which is arranged in the region of a back wall (4) of the cooking space (1) and the windings (14) of which extend substantially parallel to the back wall (4).

3. Baking oven according to claim 1, characterised thereby that the evaporating device (5) is formed by a sheet metal strip (51) which connects at least two windings (14) of the tubular heater body (2).

4. Baking oven according to one of the preceding claims, characterised thereby that the evaporating device (5, 51) is arranged in the region of a drop of the cooking space heater body (2).

5. Baking oven according to claim 4, characterised thereby that the evaporating device (5) has an end portion (7) extending further upwardly beyond its lowest point (P).

## Revendications

1. Four de cuisson pour cuisson à vapeur dans une chambre de cuisson avec au moins un élément de chauffage de la chambre de cuisson et un dispositif d'amenée d'eau qui amène de l'eau à un dispositif de vaporisation disposé dans la chambre de cuisson, caractérisé en ce que le dispositif de vaporisation (5) est fixé à l'élément de chauffage (2) de la chambre de cuisson et suivant le tracé de celui-ci avec son extension géométrique est en contact avec l'élément de chauffage (2) de la chambre de cuisson essentiellement sur toute sa longueur.

2. Four de cuisson selon la revendication 1, caractérisé en ce que l'élément de chauffage de la chambre de cuisson est un radiateur tubulaire (2) en forme d'hélice qui est disposé dans la zone d'une paroi arrière (4) de la chambre de cuisson (1) et dont les spirales (14) s'étendent essentiellement parallèlement à la paroi arrière (4).

3. Four de cuisson selon la revendication 2, caractérisé en ce que le dispositif de vaporisation (5) est formé par une bande de tôle (51) qui relie au moins deux spirales (14) du radiateur tubulaire (2).

4. Four de cuisson selon l'une des revendications précédentes, caractérisé en ce que le dispositif de vaporisation (5, 51) est disposé dans la zone d'une pente de l'élément de chauffage (2) de la chambre de cuisson.

5. Four de cuisson selon la revendication 4, caractérisé en ce que le dispositif de vaporisation (5) présente une section finale (7) s'étendant à nouveau vers le haut en passant par le point le plus bas (P) dudit dispositif.
